Europäisches Patentamt

European Patent Office

Office européen des brevets

(19)

(11) Numéro de publication: **0 251 950**
**B1**

(12)

# FASCICULE DE BREVET EUROPEEN

(45) Date de publication du fascicule du brevet:
**08.08.90**

(21) Numéro de dépôt: **87420181.7**

(22) Date de dépôt: **29.06.87**

(51) Int. Cl.⁵: **F16J 15/12**, F16L 23/00

(54) Dispositif d'étanchéité pour assemblage à faces planes parallèles et joints d'étanchéité correspondants.

(30) Priorité: **01.07.86 FR 8610121**

(43) Date de publication de la demande:
**07.01.88 Bulletin 88/1**

(45) Mention de la délivrance du brevet:
**08.08.90 Bulletin 90/32**

(84) Etats contractants désignés:
**AT BE CH DE ES FR GB GR IT LI LU NL SE**

(56) Documents cités:
**EP-A- 0 058 811**
**EP-A- 0 187 606**
**GB-A- 656 032**
**GB-A- 1 169 840**
**US-A- 4 219 204**

(73) Titulaire: **LE CARBONE LORRAINE, Tour Manhattan - La Défense 2, 5-6, place de l'Iris,, F-92400 Courbevoie(FR)**

(72) Inventeur: **Chabance, Joel, Montoisel Pralong, F-42600 Montbrison(FR)**
Inventeur: **Combe, Gérard, Allée de la colline, F-42530 Saint Genest Lerpt(FR)**

(74) Mandataire: **Séraphin, Léon et al, PECHINEY 28, rue de Bonnel, F-69433 Lyon Cedex 3(FR)**

ACTORUM AG

**Description**

L'invention concerne un dispositif et un joint d'étanchéité utilisé dans un assemblage à faces planes, tel qu'un raccord à brides pour tuyauteries, utilisé à des températures pouvant se situer entre -245°C et +1050°C, et avec des pressions dans la tuyauterie ou la cavité étanche très variées et typiquement comprises entre 0,1 Pa et 40 MPa.

La demande de brevet FR-A-2 517 789 décrit en particulier un joint d'étanchéité pour assemblage à faces planes parallèles comportant un enroulement de graphite expansé moulé à l'intérieur de l'évidement compris entre deux anneaux plats dont les faces en regard présentent chacune une gorge en V, la section radiale de cette garniture en graphite ayant une forme ovoïde qui remplit totalement l'espace compris entre ces deux anneaux et qui fait saillie en un bourrelet annulaire sur chacune des faces opposées des deux anneaux. Le serrage d'étanchéités comprime cette garniture en graphite jusqu'à permettre le contact des brides assemblées avec le métal des anneaux. Un inconvénient de ce joint, dont l'âme en graphite forme une surépaisseur par rapport aux anneaux entre lesquels il est encastré, est que lors de la compression le fluage du graphite est difficile à contrôler et peut produire de façon plus ou moins marquée des petites bavures ou échappements latéraux recouvrant la surface d'appui des anneaux et rendant difficile ou impossible la réalisation de l'étanchéité recherchée.

Notre demande de brevet FR-A-2 573 837 décrit un joint d'étanchéité destiné au même type d'application, ledit joint ayant la forme d'un anneau plat comportant une âme annulaire en graphite expansé comprimé moulé entre 2 anneaux métalliques intérieur et extérieur ayant l'un et l'autre un effet ressort selon la direction perpendiculaire aux faces planes parallèles du joint. Les extrémités des anneaux métalliques bordent l'âme en graphite précomprimé sur les faces planes du joint, de sorte que des bavures latérales ne peuvent pas se produire au serrage. Le choix de la qualité et de la structure des anneaux permet d'obtenir une gamme de taux d'écrasement au serrage qui permettra de réaliser l'étanchéité souhaitée, d'une façon qui est influencée par le comportement élastique du joint résultant de la combinaison du comportement élastique de chacun des anneaux et du comportement du graphite. Ce joint peut être utilisé avec un anneau de renfort intérieur et un anneau de centrage extérieur qui l'encadrent.

Par ailleurs, le document US-A 4 219 204 décrit un joint d'étanchéité annulaire dont l'âme est typiquement en matériau élastomère et est bordée en ses angles par des profilés anti-extrusion en fils tricotés de préférence en partie au moins métalliques. Ces profilés annulaires, dont les surfaces extérieures forment une partie des surfaces extérieures correspondantes du joint, sont par exemple en forme de L en section droite, et ils empêchent l'extrusion des portions de l'âme qu'ils recouvrent lors de la mise sous pression du joint placé dans un assemblage.

Une utilisation d'un tel joint pour réaliser l'étanchéité entre deux faces parallèles planes n'est pas envisagée.

La demanderesse a cherché à mettre au point un joint annulaire du même type géométrique que le joint du document précédent, pour réaliser l'étanchéité entre deux faces planes parallèles d'assemblage à des températures allant de -245°C à +1050°C et à des pressions variées, cela de façon reproductible d'un joint à un autre. Elle a cherché en particulier à réaliser de façon reproductible une étanchéité avec serrage en butée, permettant d'obtenir des dispositifs ou portions de dispositifs étanches dont la hauteur d'empilement à l'assemblage est prédéterminée, en particulier dans le cas de l'assemblage de deux brides planes dont l'une est creusée d'une gorge. Le dispositif d'étanchéité comprenant le joint est également considéré.

EXPOSE DE L'INVENTION

L'invention a pour premier objet un dispositif d'étanchéité pour un assemblage comportant deux faces planes parallèles qui, comme dans le document US-A 4 219 204, comprend d'une part un joint d'étanchéité annulaire ayant deux faces d'étanchéité planes parallèles et deux surfaces latérales annulaires intérieure et extérieure perpendiculaires auxdites faces d'étanchéité, ledit joint étant composé d'une âme et d'éléments de gainage annulaires à base de métal ayant chacun en section droite transversale la forme d'une cornière placée en un angle du joint, ces éléments formant au moins un couple d'éléments ayant chacun une partie transversale annulaire bordant une même face d'étanchéité du joint et une partie cylindrique annulaire dont la surface extérieure constitue une partie de la surface latérale correspondante du joint, ce dispositif comprenant d'autre part une ou plusieurs pièces qui délimitent une cavité ayant deux surfaces latérales annulaires perpendiculaires auxdites faces planes parallèles de l'assemblage, ladite cavité devant recevoir ou recevant le joint.

De façon nouvelle, ce dispositif respecte simultanément les conditions suivantes:

– l'âme du joint est en graphite expansé comprimé de masse spécifique comprise entre 1,1 et 2,0 g/cm3;
– les éléments de gainage annulaires sont métalliques, et la partie transversale annulaire de chaque élément a une largeur comprise entre 10 et 45% de la largeur du joint avec un minimum d'au moins 0,8 mm et en surface extérieure une inclinaison de 90 à 120° avec la direction longitudinale de sa partie cylindrique annulaire, de façon à avoir un appui direct de la face plane d'assemblage correspondante sur la face d'étanchéité en graphite du joint et empêcher tout échappement de graphite pendant le serrage du joint ;
– les parties cylindriques annulaires desdits éléments de gainage ont une hauteur comprise entre 25 et 50% de l'épaisseur du joint dans le cas des éléments du premier ou seul couple, de façon à obtenir l'encastrement initial de ces parties cylindriques dans la cavité ou gorge, et une hauteur comprise entre 10 et 50% dans le cas des éléments d'un éventuel deuxième couple ;

– l'épaisseur du joint avant utilisation est de 1,1 à 1,3 fois la profondeur de la cavité ou gorge et sa largeur est inférieure de moins de 0,8 mm à l'écartement des surfaces latérales annulaires de ladite cavité.

La condition de largeur de la partie transversale annulaire des éléments de gainage métalliques en fonction de la largeur du joint est critique. On a remarqué que si cette largeur est trop faible, l'emprisonnement du graphite est insuffisant, et il y a un risque de fluage du graphite de la face d'étanchéité du joint à travers l'intervalle annulaire compris entre les parties transversales des éléments de gainage intérieur et extérieur sous l'effet de la compression du joint, cela malgré l'appui initial étanche ou quasiment étanche de la face plane de l'élément d'assemblage sur la face d'étanchéité du joint. La règle de 10% minimum de la largeur du joint annulaire peut être insuffisante pour les joints de largeur faible: les joints sont en effet fabriqués par moulage avec compression à partir de bandes de graphite expansé enroulées ou disposées avec leurs surfaces parallèles à la direction longitudinale du joint, ou encore sensiblement parallèles aux surfaces latérales annulaires du joint, ces bandes étant typiquement d'épaisseur 0,4 ou 0,5 mm et il est alors préférable que les parties transversales annulaires des éléments de gainage aient une largeur d'au moins 0,8 mm de façon à recouvrir à coup sûr la jonction des deux bandes ou éléments de bande de graphite les plus extérieurs du joint et à éviter lors du serrage du joint toute décohésion localisée du graphite, décohésion qui pourrait se produire ainsi au voisinage de la surface latérale annulaire du joint malgré la compression préalable du graphite effectuée lors du moulage.

Si la largeur de la partie transversale annulaire des éléments de gainage est supérieure à 40 à 45 %, la surface annulaire de graphite a une largeur plus faible et un risque de fuite du joint apparaît et augmente avec la diminution de largeur de la face d'étanchéité en graphite bordé par les éléments de gainage métalliques. Globalement, il est souhaitable de respecter un certain équilibre entre les parties transversales annulaires qui retiennent le graphite et la plage annulaire de graphite qu'elles encastrent et qui est appliquée de façon de plus en plus forte et plus intime sur la surface plane de l'élément d'assemblage lorsque le serrage du joint augmente, entraînant une augmentation progressive de la masse spécifique et des réactions élastiques de son âme en graphite.

Selon un premier cas, l'assemblage de l'invention comporte un premier élément à face plane et un deuxième élément portant une cavité en forme de gorge annulaire dont le fond plat est parallèle à la face plane du premier élément. Le joint d'étanchéité a une largeur inférieure de 0,5 mm au plus à l'écartement des surfaces latérales annulaires de la gorge, et il comporte un seul couple d'éléments de gainage métalliques annulaires ayant chacun, de part et d'autre de la face d'étanchéité supérieure du joint constituée par du graphite affleurant entre ces éléments, une largeur comprise entre 10 et 45 % et de préférence entre 20 et 40 % de la largeur du joint, et sur la surface latérale annulaire correspondante du joint une hauteur comprise entre 25 et 50 % de l'épaisseur du joint. En outre, l'âme en graphite expansé, déjà densifiée par la fabrication du joint qui comporte un moulage avec compression à partir de bandes de graphite expansé de masse spécifique plus faible, typiquement 0,7 ou bien 1,1 g/cm$^3$, a une masse spécifique comprise entre 1,2 et 1,9 g/cm$^3$. Et l'épaisseur du joint est 1,15 à 1,3 fois la profondeur de la gorge qui le reçoit.

Lorsque ce premier type de joint est mis en place dans la gorge annulaire avec si nécessaire un léger forcement, sa face plane inférieure en graphite non revêtu, ou face inférieure d'étanchéité, repose sur le fond plat de la gorge, et les surfaces latérales annulaires non gainées du joint sont entièrement comprises dans la gorge ainsi que le bas de la partie cylindrique annulaire des éléments de gainage métalliques de la partie supérieure du joint. Lorsque, pour réaliser l'assemblage étanche, on applique la face plane du premier élément de l'assemblage sur le haut du joint, cette face plane vient porter de façon étanche sur la face annulaire d'étanchéité du joint, les petits défauts éventuels de planéité et/ou les légères différences de niveau des bords des éléments de gainage métalliques encadrant l'affleurement annulaire de graphite étant rapidement supprimés ou compensés par le début de la compression due au serrage. La suite de la compression produit une diminution de l'épaisseur ou hauteur du joint avec fluage de graphite nu dans la gorge, l'élargissement transversal de la partie haute gainée du joint au-dessus de la gorge étant efficacement limité par l'encastrement initial dans la gorge du bas des éléments de gainage métalliques et par leur tenue mécanique. L'inclinaison des parties transversales annulaires des éléments de gainage diminue pendant ce serrage, et l'étanchéité de l'espace compris entre les extrémités annulaires de ces parties transversales des éléments de gainage et la face plane d'appui du premier élément de l'assemblage étanche est maintenue, empêchant tout échappement de graphite. Avec un serrage diminuant la hauteur du joint d'au moins 10 % et typiquement de 15 à 20 %, on obtient une très bonne étanchéité due à l'application intime du graphite sur les surfaces planes de l'assemblage, à savoir le fond de la gorge et la surface annulaire du premier élément appliquée sur la face supérieure annulaire en graphite du joint bordée par les deux éléments de gainage métalliques.

Le jeu initial du joint dans la gorge est de préférence inférieur à 0,3 mm, et cela d'autant plus qu'on souhaite un bon contrôle de l'étanchéité en fonction du serrage. La conception du joint en relation avec la géométrie de la gorge permet une conservation quasi complète de la masse de graphite dans le volume du joint, ce qui a un grand intérêt pour le choix ou la prévision des dimensions d'assemblage étanche et pour la reproductibilité des résultats d'un joint à l'autre. Le léger élargissement transversal du graphite a pour effet de plaquer les parties cylindriques annulaires des éléments de gainage contre les surfaces latérales annulaires de la gorge, ce qui améliore la tenue du joint serré vis à vis de la corrosion ou des agents agressifs.

Pour qu'il n'y ait pas d'échappement de graphite entre la face plane d'appui de l'élément d'assemblage et la face annulaire en graphite du joint bordée par les éléments métalliques, il importe en pratique que en toute section droite transversale les surfaces extérieures de ces éléments soient à 90° avec la direction longitudinale de leur surface cylindrique annulaire, ou à plus de 90° de façon à ne pas empêcher l'appui direct de la face plane de l'assemblage sur la surface annulaire en graphite. Un angle plus faible que 90° laissant subsister un jeu entre les bords extrêmes des éléments de gainage encadrant le graphite et la place de l'élément d'assemblage lors de l'appui de cette face plane sur le joint, ne permet pas d'éviter un échappement plus ou moins prononcé du graphite par l'intervalle annulaire compris entre ces éléments de gainage. On préfère éviter tout échappement de graphite par l'intervalle annulaire et retenir une inclinaison de 90 à 120°, et de préférence de 90 à 100°, de façon à obtenir un bon appui sur l'extrémité supérieure du joint lors de son serrage.

Selon un deuxième cas, l'assemblage de l'invention comporte deux éléments à faces planes parallèles entre lesquels on doit réaliser l'étanchéité, et le dispositif d'étanchéité de l'invention comprend en plus du joint d'étanchéité deux anneaux métalliques intérieur et extérieur auxiliaires, pouvant jouer le rôle d'anneaux de centrage et/ou d'anneaux de renfort, et qui une fois placés sur la face plane d'un des deux éléments peuvent réaliser une gorge annulaire jouant un rôle semblable à celui de la gorge du premier cas. Comme il y a un plan de joint supplémentaire correspondant au fond de cette gorge, on utilise alors un joint selon l'invention ayant un couple d'éléments de gainage métalliques annulaires bordant chacune des deux faces d'étanchéité supérieure et inférieure, la hauteur de la partie cylindrique annulaire de chacun de ces éléments de gainage étant au maximum de 35 % de façon à laisser entre eux une hauteur non revêtue suffisante pour l'écrasement du joint.

Les conditions de jeu total dans la gorge s'appliquant à l'écartement de ces anneaux auxiliaires en position assemblée, sont les mêmes que dans le premier cas. Ces anneaux intérieur et extérieur diffèrent d'épaisseur de moins de 5 % de l'épaisseur de l'anneau le plus épais, de façon que la gorge formée entre eux lors de l'assemblage ait deux surfaces latérales annulaires de hauteur voisine. Les conditions de largeur des parties transversales annulaires des éléments de gainage sont les mêmes que dans le premier cas, le mécanisme d'étanchéité de la face supérieure se retrouvant ici pour chacune des deux faces d'étanchéité supérieure et inférieure du joint, et la hauteur de leurs parties cylindriques annulaires est comprise entre 25 et 35 % de l'épaisseur du joint avant préassemblage avec les anneaux auxiliaires. L'âme en graphite expansé comprimé a une masse spécifique comprise entre 1,2 et 1,9 g/cm³, et l'épaisseur du joint est 1,15 à 1,3 fois l'épaisseur de l'anneau métallique le moins épais de façon à réaliser les mêmes conditions que dans le premier cas : insertion initiale du bas de la partie cylindrique annulaire des éléments de gainage qui seront en position haute dans l'assemblage, avec possibilité de placer le joint dans un sens ou l'autre, et obtention d'une hauteur de graphite non revêtu à mi-épaisseur du joint suffisante pour son écrasement. Les mécanismes de réalisation de l'étanchéité sont alors, pour chacune des faces d'étanchéité, les mêmes que ceux décrits dans le premier cas pour la face supérieure d'étanchéité. L'inclinaison vers l'extérieur des surfaces latérales annulaires, dont les surfaces extérieures bordent la surface annulaire de graphite d'extrémité, c'est-à-dire dont les bords sont sensiblement au même niveau que le graphite qui affleure entre elles, doivent être comme précédemment inclinées de préférence de 90 à 120° et mieux de 90 à 100° par rapport à la direction longitudinale de leur surface cylindrique annulaire.

Un préassemblage du joint du deuxième cas avec les anneaux intérieur et extérieur correspondant peut être fait pour le transport ou pour faciliter la mise en place lors de l'assemblage. Le joint étant placé entre les anneaux, disposés par exemple sur un plan de travail, et se trouvant alors intercalé entre eux avec un jeu faible, ses éléments de gainage supérieurs ayant alors leurs parties cylindriques annulaires partiellement engagées dans la gorge réalisée, une compression limitée produit un coincement du joint entre les anneaux sous l'effet du fluage transversal de son graphite non revêtu, entre les deux couples d'éléments de gainage annulaires. La tenue de ce dispositif préassemblé pour le transport ou les manipulations dépend du jeu initial du joint dans la gorge et du taux de compression, et elle peut être mieux assurée ou obtenue pour un écrasement plus faible du joint lorsque chacun des anneaux intérieur et extérieur comporte sur sa surface annulaire délimitant la cavité un ou plusieurs reliefs en surépaisseur comprise entre 0,1 à 0,3 mm par rapport à cette surface annulaire de façon à ne pas empêcher l'introduction du joint entre les anneaux, situés à peu près à mi-épaisseur des anneaux, c'est-à-dire en face de la partie en graphite nu de l'anneau. Un tel relief d'accrochage peut être obtenu par exemple lors d'un usinage de finition des surfaces annulaires des anneaux, cet usinage laissant à mi-épaisseur une bande annulaire de largeur 0,5 ou 1 mm non reprise par cet usinage, de surépaisseur égale à 0,1 mm. Après compression du joint d'étanchéité le rendant solidaire des deux anneaux, le dispositif préassemblé comporte typiquement les modifications suivantes du joint :

c) l'épaisseur du joint ayant été réduite, ses éléments de gainage ont une hauteur comprise entre 28 et 40 % de l'épaisseur du joint.

d) son âme en graphite expansé a une masse spécifique comprise entre 1,3 et 1,9 g/cm³, et l'épaisseur du joint est 1,1 fois à 1,3 fois l'épaisseur de l'anneau le moins épais.

Selon une variante du deuxième cas (troisième cas), le joint d'étanchéité de l'invention peut comporter pour le couple d'éléments de gainage bordant sa face inférieure d'étanchéité une hauteur de leurs parties cylindriques annulaires éventuellement réduite et comprise entre 10 et 35 % de l'épaisseur du joint. Ces éléments de gainage inférieurs n'interviennent en effet que pour l'étanchéité au niveau du joint entre la face plane du deuxième élément de l'assemblage et les anneaux intérieur et extérieur. Lorsque la hauteur des parties cylindriques annulaires de ces éléments de gainage inférieurs est réduite, cette hauteur étant alors inférieure à la hauteur des éléments de gainage supérieurs et de préférence comprise entre 10 et 25% de l'épaisseur du joint, les faces d'étanchéité du joint ne peuvent pas être échangées. Toutes les autres dispositions décrites pour le deuxième cas s'appliquent.

L'invention a aussi pour objet les joints d'étanchéité utilisés dans chacun de ces trois cas. Les joints des deuxième et troisième cas peuvent éventuellement être utilisés dans le cas d'éléments d'assemblage à faces planes, dont l'un porte une gorge annulaire à fond plat parallèle à la face plane du premier élément.

Les joints de l'invention sont typiquement circulaires, mais ils peuvent avoir toute forme extérieure exigée ou compatible avec l'étanchéité à réaliser. Leur diamètre extérieur ou largeur maximale hors tout est comprise entre 6 mm et 5 mètres, typiquement entre 10 et 250 mm, tandis que la largeur (1) de l'anneau est typiquement comprise entre 4 et 50 mm.

Les éléments de gainage métalliques annulaires du joint de l'invention ont des épaisseurs qui dépendent du diamètre extérieur ou largeur maximale hors tout et sont habituellement comprises entre 0,2 et 5 mm, typiquement entre 0,2 et 2 mm dans le cas des diamètres de 10 à 250 mm. Ces éléments peuvent être en acier doux, en acier inoxydable, en alliage de cuivre ou de nickel -ces alliages permettant un meilleur glissement des éléments de gainage dans la gorge- ou en alliages du type Inconel pour les températures les plus élevées.

Ces éléments métalliques annulaires sont conformés en cornière circulaire ou annulaire, par exemple par repoussage, emboutissage, magnétoformage suivi éventuellement d'usinage ou de soudage.

Pour la fabrication du joint, on peut déterminer à l'avance la masse de graphite à utiliser en tenant compte de la géométrie et de l'étanchéité à réaliser, la plage de hauteurs de serrage ou la hauteur précise de serrage étant connue par l'expérience. On peut ainsi fabriquer des séries de joints donnant des résultats de serrage étanches reproductibles, ce qui facilite la conception de l'assemblage étanche.

Après préparation des éléments métalliques annulaires, la fabrication du joint comporte typiquement les opérations suivantes :
- on prépare des bandes de graphite expansé donnant après compression sous forme du joint une masse spécifique choisie comprise entre 1,1 et 2,0 g/cm3, en utilisant de préférence des bandes de graphite expansé de masse spécifique "0,7 g/cm3" pour une masse spécifique choisie comprise entre 1,1 et 1,5 g/cm3 et des bandes de graphite expansé de masse spécifique "1,1 g/cm3" pour une masse spécifique choisie comprise entre 1,5 et 2,0 g/cm3.
- on dispose s'il y a lieu les éléments de gainage métalliques annulaires inférieurs au fond de la cavité du moule annulaire et on dispose au-dessus les bandes de graphite expansé sur chant, c'est-à-dire avec leurs surfaces à peu près perpendiculaires aux futures faces d'étanchéité du joint, avec d'éventuelles précompressions au cours de l'introduction du graphite.
- on dispose les éléments de gainage métalliques annulaires supérieurs, leurs portions cylindriques annulaires respectives étant placées contre les surfaces latérales annulaires intérieure et extérieure de la cavité annulaire du moule.
- on effectue la compression du joint, donnant la masse spécifique choisie, au moyen de la face annulaire active du mandrin de compression. Puis on démoule le joint.

Lorsque les éléments métalliques annulaires sont en forme de cornière à plus de 90°, leurs parties transversales annulaires peuvent par exemple être soutenues au cours de ce moulage avec compression par des cales annulaires de section transversale en forme de coin, interposées entre chaque élément et le fond du moule annulaire ou la face active du mandrin de compression.

Les avantages du dispositif et du joint d'étanchéité de l'invention sont rappelés ci-dessous :
- l'étanchéité est reproductible pour un intervalle de serrage donné, ou pour une position de serrage choisie à l'avance;
- l'étanchéité par les faces d'étanchéité supérieure et inférieure du joint est complétée par des étanchéités secondaires sur les surfaces latérales annulaires de la gorge ou cavité dans laquelle est placée le joint, donnant une plus grande sécurité d'étanchéité en service;
- la protection du graphite vis à vis des agents corrosifs, en particulier vis à vis d'atmosphères oxydantes ou d'agents abrasifs tels que des atmosphères contenant des particules d'alumine ou de silice, est réalisée ou fortement améliorée grâce à l'application des parties cylindriques annulaires des éléments de gainage contre les surfaces latérales annulaires de la gorge, en position de serrage étanche.

Les joints de l'invention sont typiquement utilisés pour un serrage étanche unique maintenu pendant une longue durée, ou pour moions de dix serrages étanches successifs. Dans le cas où l'étanchéité réalisée concerne une atmosphère oxydante, la protection du graphite du joint serré permet de l'utiliser au-dessus de 650°C pendant de longues durées, ou à des températures atteignant 800 à 850°C.

Les exemples qui suivront permettront de compléter et d'illustrer la description. Des repères identiques sont utilisés pour les éléments de même structure et de même fonction.
. La figure 1 représente un dispositif ou assemblage du premier cas, selon une coupe transversale du joint d'étanchéité.
. La figure 2 est une vue de dessus du joint de la figure 1.
. La figure 3 représente un dispositif d'étanchéité du second cas, en coupe transversale du joint et des anneaux métalliques intérieur et extérieur qui le bordent.
Le joint (1) de la figure 1 comprend une face d'étanchéité supérieure (2) bordée par deux éléments de gainage métalliques annulaires (5) et (6) en acier inoxydable (AISI 304) d'épaisseur 0,8 mm, ayant des parties cylindriques annulaires (17) dont les surfaces extérieures font chacune partie des surfaces latérales annulaires (15,16) du joint (1), surfaces (15,16) qui sont perpendiculaires à ses faces d'étanchéité (2) et (3). Les éléments de gainage (5) et (6) ont chacun une partie transversale annulaire (18) inclinée de 95 à 97° par rapport à la direction longitudinale, ou direction parallèle à l'axe de révolution (XX) du joint (1), de la partie cylindrique annulaire correspondante (17). Le diamètre extérieur du joint est de 120 mm, sa largeur (1) est de 8 mm et la largeur de chacune des parties transversales circulaires (18) des éléments (5,6) est de 2,5 mm. La hauteur du joint est de 7,5 mm, et la hauteur des parties cylindriques annulaires (17) du joint (1) est de 3,5 mm.

Le joint (1), dont l'âme en graphite expansé comprimé (4) a une masse spécifique de 1,4 g/cm³ a été réalisé à partir de bandes de graphite expansé de 0,7 g/cm³. La figure 1 le représente disposé dans la gorge circulaire (12) de l'élément d'assemblage (7), dont la face plane comporte cette gorge (12) à fond plat (13) parallèle à la face plane et à surfaces latérales annulaires (8,9) perpendiculaires à ce fond plat (13).

La gorge (12) a un diamètre intérieur de 103,8 mm et un diamètre extérieur de 120,2 mm, l'écartement des surfaces latérales circulaires (15,16) de la gorge (12) ou largeur de cette gorge (12) étant égal à 8,2 mm. Dans cette position, le bas des parties cylindriques annulaires (17) pénètre de environ 2 mm dans la gorge profonde de 6 mm.

Après serrage du joint (1) par la face plane (14) du premier élément de l'assemblage, approchant cette face (14) à 1 mm de la face plane extérieure du deuxième élément (7), la face plane (14) s'applique à la fois sur la face d'étanchéité supérieure en graphite (2) et sur la moitié environ de la largeur des parties transversales annulaires (18) des deux éléments de gainage (5,6) qui bordent cette face en graphite (2). L'étanchéité est obtenue dans le cas d'un vide de 5 x 10⁻⁶ bars (0,5 Pa). Le serrage jusqu'au contact de la face plane (14) avec la face plane du deuxième élément donne une étanchéité encore plus sûre ou plus performante en position parfaitement contrôlée. Il n'y a aucun échappement de graphite à l'extérieur de la gorge (12) et la masse spécifique de l'âme en graphite (4) est alors de 1,75, donnant au joint un bon comportement élastique qui garantit le maintien de l'étanchéité dans le temps.

Le joint (101) du second cas (figure 3) de diamètres intérieur 160,4 mm et extérieur 173,6 mm, de largeur (1) 6,6 mm et d'épaisseur 8,7 mm, est représenté encastré entre deux anneaux métalliques intérieur (110), de diamètre extérieur 160,0 mm, et extérieur (111) de diamètre intérieur 174,0 mm définissant entre eux une cavité (112), avant toute compression tendant à rendre solidaires le joint (101) et les anneaux (110, 111) d'épaisseur 6,5 mm. Le joint comporte deux couples d'éléments de gainage circulaires (5,6) et (105,106), en acier inoxydable (AISI 316L) d'épaisseur 0,8 mm conformés par magnétoformage et découpés au laser, chaque élément tel que (5,105) comportant une partie transversale annulaire (18;118) inclinée à environ 105° par rapport à sa partie cylindrique annulaire (17,117) et la partie cylindrique annulaire (17,117) de hauteur 2,5 mm de chaque élément tel que (5,105) ayant une surface extérieure formant en partie une des deux surfaces cylindriques circulaires (115 ou 116) du joint (101).

La largeur de la partie transversale annulaire (18,118) de chaque élément de gainage tel que (5,105) est de 2 mm et la largeur de chaque face d'étanchéité en graphite (102,103) bordée par ces parties transversales annulaires (18,118) est de environ 2,6 mm. Le joint a été obtenu à partir de 40 g de bandes de graphite expansé de masse spécifique 1,1 g/cm³, et après moulage avec compression, c'est-à-dire dans l'état ici représenté, son âme (104) a une masse spécifique de 1,4 g/cm³. Chaque anneau de renfort et de centrage (110,111) a sur sa surface latérale annulaire (108,109) un relief périphérique (119,120) de hauteur 0,8 mm et de surépaisseur environ 0,15 mm produit par un manque volontaire d'usinage.

Le préassemblage du joint (101) par compression entre les anneaux (110,111) l'amène à 7,6 mm de hauteur, la masse spécifique de graphite expansé et recomprimé étant alors de 1,6 g/cm³, et le dispositif obtenu étant solidaire.

Le même dispositif préassemblé peut être obtenu directement par moulage avec compression entre les anneaux surmontés d'anneaux réalisant une hauteur supplémentaire de cavité annulaire, les reliefs d'accrochage éventuels de l'âme en graphite (104) du joint (101) pouvant alors avoir une surépaisseur plus forte, par exemple de 0,5 à 2 mm.

Après serrage d'étanchéité en position de blocage métal-métal sur les anneaux (110,111) de même épaisseur 6,5 mm, l'âme en graphite a une masse spécifique voisine de 1,9 g/cm³, et le dispositif permet alors de tenir une étanchéité hélium de 2 x 10⁻⁸ atm.cm³/s à des températures pouvant aller de -200 à +600°C. Il convient par exemple pour réaliser l'étanchéité vis à vis d'un fluide radioactif à 160 bars et 320°C.

**Revendications**

1. Dispositif d'étanchéité pour un assemblage comportant deux faces planes parallèles (13, 14), comprenant d'une part un joint d'étanchéité annulaire (1, 101) ayant deux faces d'étanchéité planes parallèles (2, 3; 102, 103) et deux surfaces latérales annulaires intérieure et extérieure (15, 16; 115, 116) perpendiculaires auxdites faces d'étanchéité, ledit joint (1; 101) étant composé d'une âme (4; 104) et d'éléments de gainage annulaires (5, 6; 105, 106) à base de métal ayant chacun en section droite transversale la forme d'une cornière placée en un angle du joint (1; 101), ces éléments (5, 6; 105, 106) formant au moins un d'éléments (5, 6) ayant chacun une partie transversale annulaire (18;118) bordant une même face d'étanchéité (2; 102) du joint (1; 101) et une partie cylindrique annulaire (17; 117) dont la surface extérieure constitue une partie de la surface latérale correspondante (15; 115) du joint (1, 101), le dispositif comprenant d'autre part une ou plusieurs pièces (7; 110, 111) délimitant une cavité (12; 112) ayant deux surfaces latérales annulaires (8, 9; 108, 109) perpendiculaires auxdites faces planes parallèles (13, 14) de l'assemblage, ladite cavité devant recevoir ou recevant le joint (1; 101), caractérisé en ce que, de façon à empêcher des échappements de matière de l'âme lors du serrage du joint (1; 101) entre les deux faces planes parallèles (13, 14) et à réaliser l'étanchéité, à des températures allant de −245°C et +1050°C et à des pressions variées, avec un serrage reproductible d'un joint (1; 101) à un autre joint du même type:

- l'âme (4; 104 du joint (1; 101) est en graphite expansé comprimé de masse spécifique comprise entre 1,1 et 2,0 g/cm³;
- les éléments de gainage annulaires (5 6; 105, 106) sont métalliques, et la partie transversale annulaire (18; 118) de chaque élément a une largeur comprise entre 10 et 45% de la largeur (1) du joint (1; 101) avec un minimum d'au moins 0,8 mm et en surface extérieure une inclinaison de 90 à 120° avec la direction longitudinale de sa partie cylindrique annulaire (17; 117), de façon à avoir un appui direct de la face plane d'assemblage correspondante (14) sur la face d'étanchéité (2) en graphite du joint (1) et empêcher tout échappement de graphite pendant le serrage du joint;
- les parties cylindriques annulaires (17; 117) desdits éléments de gainage (5, 6; 106) ont une hauteur comprise entre 25 et 50% de l'épaisseur du joint (1; 101) dans le cas des éléments (5, 6) du premier ou seul couple, de façon à obtenir l'encastrement initial de ces parties cylindriques (17) dans la cavité ou gorge (12; 112), et une hauteur comprise entre 10 et 50% dans le cas des éléments d'un éventuel deuxième couple (105; 106);
- l'épaisseur du joint (1; 101) avant utilisation est de 1,1 à 1,3 fois la profondeur de la cavité ou gorge (12; 112) et sa largeur est inférieure de moins de 0,8 mm à l'écartement des deux surfaces latérales annulaires (8, 9; 108, 109) de ladite cavité (12; 112).

2. Dispositif selon la revendication 1, dans le cas où l'assemblage comporte un premier élément à face plane (14) et un deuxième élément portant un cavité constituée par une gorge annulaire (12) dont le fond plat (13) est parallèle à la face plane (14) du premier élément, caractérisé en ce que:
- le joint d'étanchéité (1) a une largeur (1) inférieure de 0,5 mm au plus à l'écartement des surfaces latérales de la gorge;
- le joint comporte un seul couple d'éléments de gainage métalliques annulaires (5, 6);
- l'âme (4) du joint (1) a une masse spécifique comprise entre 1,2 et 1,9 g/cm³ et l'épaisseur du joint est 1,15 à 1,3 fois la profondeur de la gorge 12.

3. Dispositif selon la revendication 1, dans le cas où l'assemblage comporte deux éléments à faces planes parallèles, le dispositif comprenant aussi deux anneaux métalliques intérieur et extérieur (110, 111) pouvant former avec la face plane d'un des deux éléments une cavité annulaire (112) recevant le joint (101), caractérisé en ce que, à l'état non assemblé :
- les épaisseurs des deux anneaux métalliques (110, 111) diffèrent entre elles de moins de 5% de l'épaisseur de l'anneau le plus épais.
- le joint d'étanchéité (101) a une largeur (1) inférieure de 0,5 mm au plus à l'écartement des anneaux (110, 111) en position assemblée.
- le joint comporte deux couples d'éléments de gainages métalliques (5, 6; 105, 106) bordant chacune de ses deux faces d'étanchéité (102, 103), la partie cylindrique annulaire (17) de chaque élément (5) ayant une hauteur comprise entre 25 et 35% de l'épaisseur du joint (101).
- l'âme en graphite expansé comprimé du joint (104, 101) a une masse spécifique comprise entre 1,2 et 1,9 g/cm³ et l'épaisseur du joint (101) est 1,15 à 1,3 fois l'épaisseur de l'anneau métallique le moins épais.

4. Dispositif selon la revendication 3, caractérisé en ce que chacun des deux anneaux métalliques (110; 111) comporte sur sa surface latérale annulaire (108, 109) délimitant la cavité (112) au moins une surépaisseur (119; 120) dépassant cette surface de 0,1 à 0,3 mm, à une hauteur de 0,45 à 0,55 fois l'épaisseur de l'anneau en partant de la base de cet anneau.

5. Dispositif selon l'une quelconque des revendications 3 ou 4, dans lequel le joint (101) est encastré entre les deux anneaux métalliques (110, 111) et solidaire de ces anneaux, caractérisé en ce que:
- les éléments de gainage métalliques (5, 6; 105, 106) ont chacun une partie cylindrique annulaire (17) de hauteur comprise entre 28 et 40% de l'épaisseur du joint (101).
- l'âme en graphite expansé du joint a une masse spécifique comprise entre 1,3 et 1,9 g/cm³ et l'épaisseur du joint (101) est 1,1 fois à 1,3 fois l'épaisseur de l'anneau métallique le moins épais.

6. Joint d'étanchéité annulaire (1; 101) ayant deux faces d'étanchéité planes parallèles (2, 3; 102, 103) et deux surfaces latérales annulaires intérieure et extérieure (15, 16; 115, 116) perpendiculaires auxdites faces d'étanchéité(2, 3; 102, 103), ledit joint (1; 101) étant composé d'une âme (4; 104) et d'éléments de gainage annulaires (5, 6; 105, 106) à base de métal ayant chacun en section droite transversale la forme d'une cornière placée en un angle du joint (1; 101), ces éléments (5, 6; 105, 106) formant au moins un couple d'éléments (5, 6) ayant chacun une partie transversale annulaire (8; 118) bordant une même face d'étanchéité (2; 102) du joint (1; 101) et une partie cylindrique annulaire (17, 117) dont la surface extérieure constitue une partie de la surface latérale correspondante (15; 115) du joint (1; 101), caractérisé en ce que:
- l'âme (4; 104) du joint (1; 101) est en graphite expansé comprimé de masse spécifique comprise entre 1,2 et 1,9 g/cm³;
- les éléments de gainage annulaires (5, 6; 106) sont métalliques, et la partie transversale annulaire (8; 118) de chaque élément a une largeur comprise entre 10 et 45% de la largeur (1) du joint (1; 101) avec un minimum d'au moins 0,8 mm et en surface extérieure une inclinaison de 90 à 120° avec la direction longitudinale de sa partie cylindrique annulaire (17; 117);

– les parties cylindriques annulaires (17; 117) desdits éléments de gainage (5, 6; 106) ont une hauteur comprise entre 25 et 50% de l'épaisseur du joint (1; 101) dans le cas des éléments (5, 6) du premier ou seul couple, et une hauteur comprise entre 10 et 50% dans le cas des éléments d'un éventuel deuxième couple (105; 106);

7. Joint selon la revendication 6, dans lequel la partie transversale annulaire (8; 118) de chaque élément de gainage annulaire (5, 6; 105, 106) fait en surface un angle de 90 à 100° avec la direction longitudinale de sa partie cylindrique annulaire (7; 117).

8. Joint (101) selon l'une quelconque des revendications 6 ou 7, comportant deux couples d'éléments de gainage (5, 6 et 105, 106) bordant respectivement chacune de ses deux faces d'étanchéité (102, 103), la hauteur de la partie cylindrique annulaire de chacun desdits éléments (5, 6, 105, 106) étant comprise entre 25 et 35% de l'épaisseur du joint (101).

9. Joint selon l'une quelconque des revendications 6 ou 7, comportant deux couples d'éléments de gainage bordant respectivement chacune de ses deux faces d'étanchéité, la hauteur des parties cylindriques annulaires desdits éléments étant comprise entre 25 et 35% de l'épaisseur du joint dans le cas des éléments d'un premier couple et entre 10 et 35% de ladite épaisseur dans le cas des éléments du deuxième couple.

10. Joint d'étanchéité selon la revendication 9, dans lequel les éléments de gainage du deuxième couple ont une hauteur inférieure à la hauteur des éléments de gainage du premier couple et comprise de préférence entre 10 et 25% de l'épaisseur du joint.

## Patentansprüche

1. Abdichtungsvorrichtung für eine Anordnung mit zwei planen parallelen Flächen (13, 14), die aufweist:
einerseits einen Dichtring (1, 101) mit zwei planen parallelen Dichtflächen (2, 3; 102, 103) und zwei ringförmigen inneren bzw. äußeren Seitenflächen (15, 16; 115, 116), die senkrecht zu den Dichtflächen verlaufen, wobei die Dichtung (1, 101) aus einer Seele (4; 104) und ringförmigen Schutzelementen (5, 6; 105, 106) auf Metallbasis bestehen, die jedes einen senkrechten Querschnitt in Form eines Winkelprofils aufweisen, das an einer Kante der Dichtung (1; 101) angeordnet ist, wobei diese Elemente (5, 6; 105, 106) mindestens ein Elementepaar (5, 6) bilden, das jeweils einen transversalen ringförmigen Bereich (18; 118) aufweist, das die gleiche Dichtfläche (2; 102) der Dichtung (1; 101) begrenzt und einen kreiszylinderförmigen Teil (17, 117), dessen Außenfläche einen Teil der entsprechenden Seitenfläche (15; 115) der Dichtung (1, 101) bildet, und andererseits ein Teil oder mehrere Teile (7; 110, 111), die einen Hohlraum (12; 112) begrenzen, der zwei ringförmige Seitenflächen (8, 9; 108, 109) aufweist, die senkrecht zu den planen parallelen Flächen (13, 14) der Anordnung verlaufen, wobei der Hohlraum die Dichtung (1; 101) aufnimmt, dadurch gekennzeichnet, daß um ein Austreten der Masse der Seele während des Anziehens der Dichtung (1; 101) zwischen den beiden planen parallelen Flächen (13, 14) und um die Dichtheit zu bewirken, bei Temperaturen zwischen –245°C und 1050°C sowie bie unterschiedlichen Drucken mit bezüglich einer von einer Dichtung auf andere Dichtungen des gleichen Typs übertragbaren Klemmung:

– die Seele (4; 104), der Dichtung (1, 101) aus expandiertem komprimiertem Graphit mit einer spezifischen Dichte zwischen 1,1 und 2,0 g pro cm$^3$ besteht;

– die ringförmigen Schutzelemente (5, 6; 105, 106) aus Metall sind und der ringförmige transversale Teil (18; 118) eines jeden Elements eine Breite hat zwischen 10 und 45% der Breite (1) der Dichtung (1; 101) mit einer minimalen Breite von 0,8 mm und einer Außenfläche mit einer Neigung von 90 bis 120°C bezüglich der Längsrichtung des zylindrischen ringförmigen Teils (17; 117) derart, daß eine direkte Auflage auf der ebenen Fläche der entsprechenden Anordnung (14) auf der Dichtfläche (2) der Dichtung (1) aus Graphit bewirkt wird und jedes Austreten von Graphit während der Klemmung der Dichtung verhindert wird;

– die zylinderförmigen ringförmigen Bereiche (17; 117) der Schutzelemente (5, 6; 106) eine Höhe zwischen 25 und 50% der Dicke der Dichtung (1; 101) aufweisen, bei Elementen (5, 6) des ersten oder einzigen Paares, so daß ein ursprüngliches Eingrenzen der zylinderförmigen Teile (17) in dem Hohlraum oder der Nut (12; 112) erfolgt und wobei die Schutzelemente beim Vorhandensein eines zweiten Paares (105; 106) eine Höhe zwischen 10 und 50% aufweisen; und

– die Dicke der Dichtung (1; 101) vor der Verwendung zwischen 1,1 bis 1,3 × die Tiefe des Hohlraums oder der Nut (12; 112) und ihre Breite mindestens 0,8 mm kleiner als der Abstand der beiden Ringseitenflächen (8, 9; 108, 109) des Hohlraums (12; 112) beträgt.

2. Vorrichtung nach Anspruch 1, wobei die Anordnung ein erstes Element mit einer ebenen Seite (14) und ein zweites Element mit einem Hohlraum, der durch eine Ringnut (12) gebildet wird, dessen ebener Boden (13) parallel zur ebenen Fläche (14) des ersten Elements verläuft, aufweist, dadurch gekennzeichnet, daß
– die Dichtung (1) eine Breite kleiner als 0,5 mm zusätzlich zu dem Abstand zwischen den Seitenwänden der Nut aufweist,
– die Dichtung ein einziges Paar von ringförmigen Schutzelementen aus Metall (5, 6) aufweist, und
– die Seele (4) der Dichtung (1) eine spezifische Dichte zwischen 1,2 und 1,9 g pro cm$^3$ aufweist und die Dicke der Dichtung 1,15 bis 1,3 × größer als die Tiefe der Nut (12) ist.

3. Vorrichtung nach Anspruch 1, wobei die Anordnung zwei Elemente mit ebenen parallelen Flächen aufweist, woei die Vorrichtung ebenfalls zwei innere und äußere Metallringe (110, 111) aufweist, die mit der ebenen Fläche eines der beiden Elemente einen ringförmigen Hohlraum (112) bilden kann, der die Dichtung (101) aufnimmt, dadurch gekennzeichnet, daß im nicht zusammengesetzten Zustand:

    – die Dicken der beiden Metallringe (110, 111) sich untereinander um weniger als 5% der Dicke des Rings mit der größeren Dicke unterscheiden;

    – die Dichtung (101) eine Breite hat, die 0,5 mm höchstens kleiner als der Abstand der Ringe (110, 111) in zusammengesetzter Lage ist,

    – die Dichtung zwei Schutzelementepaare aus Metall (5, 6; 105, 106) aufweist, die jeweils an den Kanten der beiden Dichtflächen (102, 103) angeordnet sind, wobei der zylindrische ringförmige Bereich (117) jedes Elements (5) eine Höhe aufweist, die zwischen 25 und 35% der Dicke der Dichtung (101) liegt, und

    – die Seele aus expandiertem komprimiertem Graphit der Dichtungen (104, 101) eine Dichte aufweist zwischen 1,2 und 1,9 g pro cm³ und die Dicke der Dichtungen (101) 1,15, bis 1,3 × mal größer als die Dicke des Teilrings mit kleinerer Dicke ist.

4. Vorrichtung nach Anspruch 3, dadurch gekennzeichnet, daß jeder der beiden Metallringe (110; 111) auf seiner ringförmigen Seitenfläche (108, 109), die den Hohlraum (112) begrenzt, mindestens eine Überdicke (119; 120) hat, die über diese Oberfläche um 0,1 bis 0,3 mm übersteht, bei einer Höhe von 0,45 bis 0,55 × der Dicke des Rings, ausgehend von seiner Basis gemessen.

5. Vorrichtung nach einem der Ansprüche 3 oder 4, bei dem die Dichtung (101) zwischen zwei Metallringen (110, 111) eingeschlossen und an diesen Ring befestigt ist, dadurch gekennzeichnet, daß

    – die Schutzelemente aus Metall (5, 6; 105, 106) jeweils einen zylinderförmigen ringförmigen Bereich (17) mit einer Höhe zwischen 28 und 35% der Dicke der Dichtung (101) aufweisen,

    – die Seele aus expandiertem Graphit der Dichtung eine spezifische Dichte hat zwischen 1,3 und 1,9 g pro cm³ und die Dicke der Dichtung (101) 1,1 bis 1,3 × die Dicke des dünneren Metallrings beträgt.

6. Dichtring (1; 101) mit zwei planen parallelen Dichtflächen (2, 3; 102, 103) und zwei ringförmigen inneren bzw. äußeren Seitenflächen (15, 16; 115, 116), die senkrecht zu den Dichtflächen (2, 3; 102, 103) verlaufen, mit einer Seele (4; 104) und ringförmigen Schutzelementen (5, 6; 105, 106) auf Metallbasis mit jeweils einem Querschnitt in Form eines Winkelprofils, das einer Kante der Dichtung (1; 101) angebracht ist, wobei die Elemente (5, 6; 105, 106) mindestens ein Elementepaar (5, 6) bilden, das jeweils einen transversalen Ringteil (8; 118) aufweist, das die gleiche Dichtfläche (2, 102) der Dichtungen (1; 101) umrandet und einen zylinderförmigen Ringteil (17, 117), dessen äußere Oberfläche einen Teil der entsprechenden Seitenfläche (15; 115) der Dichtung (1; 101) bildet, dadurch gekennzeichnet, daß

    – die Seele (4; 104) der Dichtung (1; 101) aus expandiertem komprimiertem Graphit mit einer spezifischen Dichte zwischen 1,2 und 1,9 g cm³ besteht;

    – die ringförmigen Schutzelemente (5, 6; 106) aus Metall bestehen und der transversale Ringbereich (8; 118) eines jeden Elements eine Breite hat, die zwischen 10 und 45% der Breite (1) der Dichtung (1; 101) liegt mit mindestens einer Breite von 0,8 mm und mit einer Außenseite mit einer Neigung von 90 bis 120° bezüglich der Längsrichtung seines ringförmigen Zylinderbereichs (17; 117); und

    – die zylinderförmigen Ringbereiche (17; 117) der Schutzelemente (5, 6; 106), deren Höhe zwischen 25 und 50% der Dicke der Dichtung (1; 101) bei den Elementen (5, 6) des ersten Paares liegt und mit einer Höhe zwischen 10 und 50% bei Elementen eines gegebenenfalls vorhandenen zweiten Paares (105; 106).

7. Dichtung nach Anspruch 6, bei der der transversale Ringbereich (8; 118) eines jeden ringförmigen Schutzelementes (5, 6; 105, 106) an der Oberfläche einen Winkel von 90 bis 100° mit der Längsrichtung des zylinderförmigen Bereichs (7; 117) einschließt.

8. Dichtung (101) nach einem der Ansprüche 6 oder 7, mit zwei Schutzelementepaaren (5, 6 und 105, 106), die jeweils die beiden Dichtflächen (102, 103) umranden, wobei die Höhe des zylinderförmigen ringförmigen Bereichs jedes der Elemente (5, 6; 105, 106) zwischen 25 und 35% der Dicke der Dichtung (101) beträgt.

9. Dichtung nach einem der Ansprüche 6 oder 7, mit zwei Schutzelementepaaren, die jeweils eine der beiden Dichtflächen umranden, wobei die Höhe der zylinderförmigen ringförmigen Bereiche der Elemente zwischen 25 und 35% der Dicke des Rings beträgt bei den Elementen des ersten Paares und zwischen 10 und 35% dieser Dicke bei den Elementen des zweiten Paares.

10. Dichtung nach Anspruch 9, bei der die Schutzelemente des zweiten Paares eine Höhe haben, die kleiner als die Höhe der Schutzelemente des ersten Paares ist und vorzugsweise zwischen 10 und 25% der Höhe der Dichtung liegt.

## Claims

1. A sealing device for a joint comprising two parallel flat faces (13, 14) comprising, on the one hand, an annular gasket (1, 101) having two parallel flat sealing faces (2, 3; 102, 103) and one internal and one external annular lateral surface (15, 16; 115, 116), which are perpendicular to said sealing faces, said gasket (1; 101) being composed of a core (4; 104) and of annular metal-based sheathing elements (5, 6; 105, 106), each having, in cross section, the form of an angle placed at a corner of the gasket (1; 101), these elements (5, 6; 105, 106) forming at least one pair of elements (5, 6) each having an annular transverse portion (18; 118) bordering the same sealing face (2; 102) of the gasket (1; 101) and an annular cylindrical portion (17; 117) of which the external surface constitutes part of the corresponding lateral surface (15; 115) of the gasket (1, 101), the device comprising, on the other hand, one or more parts (7; 110, 111) defining a cavity (12; 112) having two annular lateral surfaces (8, 9; 108, 109) which are perpendicular to said parallel flat faces (13, 14) of the joint, said cavity having to receive or receiving the gasket (1; 101), characterised in that, to prevent the escape of material from the core when the gasket (1; 101) is gripped between the two parallel flat faces (13, 14) and to produce the seal at temperatures ranging from –245°C to +1050°C and at varied pressures, with gripping of a gasket (1; 101) which can be reproduced on another gasket of the same type:

– the core (4; 104) of the gasket (1; 101) is of compressed expanded graphite having a density of between 1.1 and 2.0 g/cm³;

– the annular sheathing elements (5, 6; 105, 106) are metallic, and the annular transverse portion (18; 118) of each element has a width of between 10 and 45% of the width (1) of the gasket (1; 101) with a minimum of at least 0.8 mm and, at the external surface, an inclination of 90 to 120° to the longitudinal direction of its annular cylindrical portion (17; 117) so that the corresponding flat connecting face (14) is supported directly on the graphite sealing face (2) of the gasket (1) and escape of graphite during the gripping of the gasket is prevented;

– the annular cylindrical portions (17; 117) of said sheathing elements (5, 6; 106) have a height of between 25 and 50% of the thickness of the gasket (1; 101) in the case of elements (5, 6) of the first or single pair so that these cylindrical portions (17) will initially be encased in the cavity or groove (12; 112), and a height of between 10 and 50% in the case of the elements of a possible second pair (105; 106);

– the thickness of the gasket (1; 101) prior to use is from 1.1 to 1.3 times the depth of the cavity or groove (12; 112), and its width is less than 0.8 mm smaller than the distance between the two annular lateral surfaces (8, 9; 108, 109) of said cavity (12; 112).

2. A device according to claim 1, in the case where the joint comprises a first element having a flat face (14) and a second element bearing a cavity constituted by an annular groove (12) of which the flat bottom (13) is parallel to the flat face (14) of the first element, characterised in that

– the gasket (1) has a width (1) which is at most 0.5 mm smaller than the distance between the lateral surfaces of the groove;

– the gasket comprises a single pair of annular metallic sheathing elements (5, 6);

– the core (4) of the gasket (1) has a density of between 1.2 and 1.9 g/cm³, and the thickness of the gasket is 1.15 to 1.3 times the depth of the groove (12).

3. A device according to claim 1, in the case where the joint comprises two elements with parallel flat faces, the device also comprising one internal and one external ring (110, 111) capable of forming, with the flat face of one of the two elements, an annular cavity (112) receiving the gasket (101) characterised in that, in the unassembled state:

– the thicknesses of the two metallic rings (110, 111) differ from one another by less than 5% of the thickness of the thickest ring;

– the gasket (101) has a width (1) which is at most 0.5 mm smaller than the distance between the rings (110, 111) in the assembled position;

– the gasket comprises two pairs of metallic sheathing elements (5, 6; 105, 106) bordering each of its two sealing faces (102, 103), the annular cylindrical portion (17) of each element (5) having a height of between 25 and 35% of the thickness of the gasket (101);

– the compressed expanded graphite core of the gasket (104, 101) has a density of between 1.2 and 1.9 g/cm³, and the thickness of the gasket (101) is 1.15 to 1.3 times the thickness of the least thick metallic ring.

4. A device according to claim 3, characterised in that each of the two metallic rings (110; 111) comprises, on its annular lateral surface (108, 109) defining the cavity (112), at least one bulge (119; 120) exceeding this surface by 0.1 to 0.3 mm at a height of from 0.45 to 0.55 times the thickness of the ring, starting from the base of this ring.

5. A device according to any one of claims 3 or 4, in which the gasket (101) is encased between the two metallic rings (110, 111) and is integral with these rings, characterised in that

– the metallic sheathing elements (5, 6; 105, 106) each have an annular cylindrical portion (17) with a height of between 28 and 35% of the thickness of the gasket (101),

– the expanded graphite core of the gasket has a density of between 1.3 and 1.9 g/cm³ and the thickness of the gasket (101) is 1.1 to 1.3 times the thickness of the least thick metallic ring.

6. An annular gasket (100, 101) having two parallel flat sealing faces (2, 3; 102, 103) and one internal and one external annular lateral surface (15, 16; 115, 116) which are perpendicular to said sealing faces (2, 3; 102, 103), said gasket (1; 101) being composed of a core (4; 104) and of annular metal-based sheathing elements (5, 6; 105, 106), each having, in cross section, the form of an angle placed at a corner of the gasket (1; 101), these elements (5, 6; 105, 106) forming at least one pair of elements (5, 6) each having an annular transverse portion (18; 118) bordering the same sealing face (2; 102) of the gasket (1; 101) and an annular cylindrical portion (17; 117) of which the external surface constitutes a portion of the corresponding lateral surface (15; 115) of the gasket (1, 101), characterised in that:

– the core (4; 104) of the gasket (1; 101) is of compressed expanded graphite having a density of between 1.2 and 1.9 g/cm³;

– the annular sheathing elements (5, 6; 106) are metallic, and the annular transverse portion (8; 118) of each element has a width of between 10 and 45% of the width (1) of the gasket (1; 101) with a minimum of at least 0.8 mm and, at the external surface, an inclination of 90 to 120° to the longitudinal direction of its annular cylindrical portion (17; 117);

– the annular cylindrical portions (17; 117) of said sheathing elements (5, 6; 106) have a height of between 25 and 50% of the thickness of the gasket (1; 101) in the case of elements (5, 6) of the first or single pair and a height of between 10 and 50% in the case of the elements of a possible second pair (105; 106).

7. A gasket according to claim 6, in which the annular transverse portion (8; 118) of each annular sheathing element (5, 6; 105, 106) forms, at the surface, an angle of 90 to 100° with the longitudinal direction of its annular cylindrical portion (7; 117).

8. A gasket (101) according to any one of claims 6 or 7, comprising two pairs of sheathing elements (5, 6 and 105, 106) respectively bordering each of its two sealing faces (102, 103), the height of the annular cylindrical portion of each of said elements (5, 6, 105, 106) being between 25 and 35% of the thickness of the gasket (101).

9. A gasket, according to any one of claims 6 or 7, comprising two pairs of sheathing elements respectively bordering each of its two sealing faces, the height of the annular cylindrical portions of said elements being between 25 and 35% of the thickness of the gasket in the case of the elements of the first pair and between 10 and 35% of said thickness in the case of the elements of the second pair.

10. A gasket according to claim 9, in which the sheathing elements of the second pair have a height smaller than the height of the sheathing elements of the first pair and preferably of between 10 and 25% of the thickness of the gasket.